# EUROPÄISCHE PATENTANMELDUNG

(11) **EP 1 964 656 A2**
(43) Veröffentlichungstag der Anmeldung: **03.09.2008**
(21) Anmeldenummer: 08003912.6
(22) Anmeldetag: 03.03.2008
(51) Int. Cl.: B28B 11/00

(54) **Vorrichtung und Verfahren zum Einbringen eines pastösen Materials in einen Wabenkörper**

(30) Priorität: 01.03.2007 DE 102007010399
(71) Anmelder: MASCHINENBAU GEROLD GMBH + CO. KG, 41334 Nettetal-Kaldenkirchen (DE)
(72) Erfinder: Deutges, Johannes, 41334 Nettetal (DE); Van der Beek, Christoph, 41334 Nettetal (DE)
(74) Vertreter: Reuther, Martin

(57) **Zusammenfassung**

Um Vorrichtungen (14) zum Einbringen eines pastösen Materials (15) in einen Wabenkörper (1), insbesondere in einen Wabenkörpers eines Katalysators, weiterzuentwickeln, schlägt die Erfindung eine Vorrichtung zum Einbringen eines pastösen Materials in einen Wabenkörper vor, wobei der Wabenkörper wenigstens zwei mit Öffnungen (8) an einer Körperoberfläche austretende Hohlräume aufweist und diese Körperoberfläche mit einer Wegwerfmaske (2) bedeckbar ist, die an wenigstens einer Öffnung durch wenigstens ein Loch (9) perforiert ist, und sich die Einbringvorrichtung durch einen mechanischen Förderer (19) zum Beaufschlagen des pastösen Materials mit einem zum Einbringen des pastösen Materials erforderlichen Druck auszeichnet.

## Beschreibung

Die Erfindung betrifft einerseits eine Vorrichtung zum Einbringen eines pastösen Materials in einen Wabenkörper, wobei der Wabenkörper wenigstens zwei mit Öffnungen an einer Körperoberfläche austretende Hohlräume aufweist und diese Körperoberfläche mit einer Wegwerfmaske bedeckbar ist, die an wenigstens einer Öffnung durch wenigstens ein Loch perforiert ist. Andererseits betrifft die Erfindung ein Verfahren zum Einbringen eines pastösen Materials in einen Wabenkörper.

Sowohl Vorrichtungen als auch Verfahren zum Einbringen eines pastösen Materials in einen Wabenkörper, insbesondere in dessen Hohlräume, wie etwa Kanäle, sind aus dem Stand der Technik hinlänglich bekannt. Insbesondere bei der Realisierung von Katalysatoren werden solche Wabenkörper sehr verbreitet eingesetzt. Die Wabenkörper können insbesondere auch zur Realisierung von monolithischen Katalysatoren zum Reinigen von Abgasen, insbesondere zum Reinigen von Abgasen aus Verbrennungskraftmaschinen eingesetzt werden. Monolithische Katalysatoren zum Reinigen von Abgasen, wie bei einer Oxidation von CO oder Kohlenwasserstoffen zu CO₂ und Wasser oder bei einer Reduktion von NO, mit Ammoniak oder Harnstoff zu N₂ und Wasser oder einer Zersetzung von Harnstoff bzw. dessen thermisches Zersetzungsprodukt, die Isocyansäure, zu Ammoniak und CO₂ sind seit langen Stand der Technik.

Damit zu reinigende Abgase möglichst effektiv durch derartige Wabenkörper hindurch strömen können, werden oftmals zumindest einige der durch den Wabenkörper gebildeten Kanäle zumindest teilweise an einer Seite des Wabenkörpers durch geeignete Mittel verstopft, sodass die Abgase verstärkt durch Wabenkörperwände hindurch strömen müssen, wobei sie intensiver mit zum Reinigen der Abgase geeigneten Oberflächenbeschichtungen an der Wabenstruktur in Kontakt kommen und dort reagieren können.

Zum Verschließen der Wabenkörperhohlräume bzw. -kanäle werden häufig auch pastöse Materialien verwendet, die unter Druck in die Wabenkörperkanäle hinein gepresst werden.

Beispielsweise ist hierzu aus den Offenlegungsschriften EP 1640 068 A1 oder DE 101 22 039 A1 ein gattungsgemäßer Herstellprozess bekannt, bei welchem ein Wabenkörper mit einer seiner Stirnseiten in ein pastöses Materialreservoir bis an einen Reservoirboden heran derart eingetaucht wird, dass sich das pastöse Material in vorhandene Wabenkörperkanäle hinein presst. Ist beabsichtigt, dass nicht alle Wabenkörperkanäle mit diesem pastösen Material verschlossen werden sollen, kann an den Stirnseiten des Wabenkörpers, also an denjenigen Seiten des Wabenkörpers, an denen die Wabenkörperkanäle mit ihren Öffnungen enden, eine mit Löchern perforierte Maske aufgesetzt werden. Diese Maske kann derart mit Löchern versehen sein, dass nicht alle Wabenkörperöffnungen durch die Maske bedeckt sind, sodass in die nicht durch die Maske bedeckten Wabenkörperkanäle pastöses Material eindringen und die Wabenkörperkanäle entsprechend verschließen kann.

Eine weitere Variante für diesen Herstellungsprozess sieht einen gummiartigen Abzieher im Bereich des Materialreservoirbodens vor, mittels welchem nach dem Einbringen des pastösen Materials in die Wabenkörperkanäle über die Öffnungen der Wabenkanäle gestrichen und hierbei über die Öffnungen überstehendes pastöses Restmaterial von der Wabenkörperstimseite seitlich abgezogen werden kann. Hierdurch soll der durch das pastöse Material gefüllte Wabenkörper eine sauber abgezogene Wabenkörperstimseite aufweisen. Darüber hinaus soll hierdurch überschüssiges pastöses Material wieder verwendet werden können und im Zuge der Weiterverarbeitung des gefüllten Wabenkörpers nicht verloren gehen.

Es ist Aufgabe vorliegender Erfindung gattungsgemäße Vorrichtungen zum Einbringen eines pastösen Materials in einen Wabenkörper weiterzuentwickeln, so dass neben und trotz einer weiteren Materialeinsatzoptimierung der Vorgang des Einbringens zeitoptimiert erfolgen kann.

Die Aufgabe der Erfindung wird einerseits von einer Vorrichtung zum Einbringen eines pastösen Materials in einen Wabenkörper gelöst, wobei der Wabenkörper wenigstens zwei mit Öffnungen an einer Körperoberfläche austretende Hohlräume aufweist und diese Körperoberfläche mit einer Wegwerfmaske bedeckbar ist, die an wenigstens einer Öffnung durch wenigstens ein Loch perforiert ist, und wobei sich die Vorrichtung durch einen mechanischen Förderer zum Beaufschlagen des pastösen Materials mit einem zum Einbringen des pastösen Materials erforderlichen Druck auszeichnet.

Im Gegensatz zu Vorrichtungen oder Verfahren aus dem Stand der Technik wird der Wabenkörper nicht einfach in ein pastöses Materialreservoir eingetaucht, um so ein Eindringen des pastösen Materials in vorhandene Hohlräume oder Kanäle des Wabenkörpers zu ermöglichen. Vielmehr ermöglicht der mechanischen Förderer zum Beaufschlagen des pastösen Materials mit einem zum Einbringen erforderlichen Druck ein äußerst genau gesteuertes Einbringen einer pastösen Materialmenge in die Wabenkörperkanäle, wodurch nicht nur eine Materialersparnis erzielt sondern auch ein zuverlässiges Befüllen jedes Kanals gewährleistet werden kann.

In vorliegendem Zusammenhang bezeichnet der Begriff "Wabenkörper" jeden Körper mit wenigstens zwei aus seiner Körperoberfläche austretenden Hohlräumen, deren Querschnitt parallel zu dieser Körperoberfläche kleiner als deren Tiefe senkrecht zu dieser Körperoberfläche ist. Die Hohlräume können hierdurch beispielsweise Kanäle im Wabenkörper bilden, welche sich von einer ersten Stirnseite zu einer zweiten Stirnseite des Wabenkörpers erstrecken können, so dass sich eine erste Öffnung eines Kanals an der Körperoberfläche an der ersten Stirnseite und sich eine weitere Öffnung desselben Kanals an der Körperoberfläche an der zweiten Stirnseite befindet. Die Stirnseiten des Wabenkörpers werden dann von den Körperoberflächen mit ihren austretenden Hohlräumen gebildet, wobei ein derartiger Wabenkörper mit lediglich zwei solchen Hohlräumen entsprechend vier Öffnungen aufweist. Während dieser Fall an sich einen seltenen Grenzfall darstellt, zielt vorliegende Erfindung insbesondere auf Wabenkörper mit einer Vielzahl solcher Hohlräume, so dass sich insbesondere ein separates Füllen der einzelnen Öffnungen nicht mehr wirtschaftlich darstellen lässt.

Der Wabenkörper kann hierbei aus den unterschiedlichsten Materialien bestehen und zusätzlich eine oder mehrere Beschichtungen aufweisen, die beispielsweise eine Abgasreinigung unterstützen. Insbesondere im Zusammenhang mit den eingangs erläuterten monolithischen Katalysatoren kann der vorliegende Wabenkörper vorteilhaft verwendet werden. So kann der Wabenkörper auch jegliche Querschnittsform realisieren, wie beispielsweise eine runde, eine viereckige, eine dreieckige Körperform oder als Parallelogramm oder ähnliches ausgebildet sein. Insbesondere im Zusammenhang mit einer Verwendung an einem Katalysator kann der Wabenkörper stirnseitig an definierten oder auch undefinierten Hohlraumöffnungen bzw. Kanalöffnungen, eventuell auch an allen Hohlraumöffnungen bzw. Kanalöffnungen, verschlossen sein.

Der Begriff "Wegwerfmaske" umfasst in vorliegendem Zusammenhang jegliche Einrichtung, mittels welcher die Hohlraumöffnungen bzw. Kanalöffnungen stirnseitig am Wabenkörper abdeckbar sind. Die Wegwerfmaske kann bevorzugt aus einer Klebefolie oder aus anderen geeigneten Materialien bestehen, welche problemlos auf eine Körperoberfläche bzw. Stimseitenflächen des Wabenkörpers aufgesetzt werden kann. Um ein Eindringen des pastösen Materials in Kanalöffnungen des Wabenkörpers trotz aufgesetzter Wegwerfmaske zu ermöglichen, werden definiert oder auch undefiniert Durchgangslöcher in die Wegwerfmaske eingebracht. Das Einbringen dieser Durchgangslöcher kann bereits vor einem Aufbringen der Wegwerfmaske auf eine der Stirnseiten des Wabenkörpers vorgenommen werden oder erst, wenn die Wegwerfmaske auf den Wabenkörper aufgesetzt wird oder bereits aufgesetzt ist. Gegebenfalls kann als Wegwerfmaske auch ein flüssiges, fließ- oder streichfähiges Material, wie beispielsweise Wachs, zur Anwendung kommen, welches ggf. vor dem Einbringen des pastösen Materials ausgehärtet wird. Wie die Wegwerfmaske nach dem Einbringen des pastösen Materials entfernt wird, oder ob sie sogar an dem Wabenkörper verbleibt ist in vorliegendem Zusammenhang unerheblich.

Darüber hinaus wird die Aufgabe der Erfindung von einer Vorrichtung zum Einbringen eines pastösen Materials in einen Wabenkörper gelöst, wobei der Wabenkörper wenigstens zwei mit Öffnungen an einer Körperoberfläche austretende Hohlräume aufweist und die Körperoberfläche mit einer Wegwerfmaske bedeckbar ist, die an wenigstens einer Öffnung durch wenigstens ein Loch perforiert ist, und sich die Einbringvorrichtung durch einen kontinuierlichen Förderer zum Beaufschlagen des pastösen Materials mit dem zum Einbringen erforderlichen Druck auszeichnet.

Auch mittels des kontinuierlichen Förderers kann das Einbringen einer Menge des pastösen Materials in die Wabenkörperkanäle wesentlich genauer gesteuert werden, da sich durch dieses kontinuierliche Fördern des pastösen Materials die Mengenzufuhr besser kontrollieren lässt. Insbesondere kann zu sämtlichen Betriebszeitpunkten ein definierter Druck gewährleistet werden, was bei diskontinuierlich arbeitenden Förderern, beispielsweise bei Kolbenpumpen, gerade nicht möglich ist. Hierbei ist es nicht zwingend erforderlich, das der kontinuierliche Förderer auch kontinuierlich fördert, es reicht vielmehr aus, dass er hierzu in der Lage ist. Insbesondere wenn bei einem Werkstückwechsel kein Gegendruck aufgebracht werden kann, kann es bei diskontinuierlichen Förderern zu undefinierten Verlagerungen des pastösen Materials kommen, die ein betriebssicheres Arbeiten erheblich erschweren.

Insbesondere können somit mittels eines kontinuierlichen Förderers selbst große Stückzahlen an Wabenkörpern besonders zuverlässig mit pastösem Material angereichert und insbesondere auch variierende Volumenströme, welche in Wabenkörperhohlräume bzw. -kanäle eingebracht werden müssen, gut beherrscht werden.

Vorzugsweise kommt ein kontinuierlich arbeitender mechanischer Förderer zur Anwendung, so dass die vorgenannten Vorteile kumulieren. Es versteht sich, dass sowohl der mechanische Förderer als auch der kontinuierliche Förderer mittels einer Vielzahl an geeigneten Förderern an der Einbringvorrichtung realisiert werden können. Beispielsweise umfassen hierfür geeignete Fördereinrichtungen eine Pumpe, eine Presse oder ähnlich arbeitende mechanische Förderer.

Sowohl hinsichtlich des mechanischen Förderers als auch des kontinuierlichen Förderers hat sich eine Förderschnecke einer Schneckenpumpe als besonders vorteilhafter Förderer etabliert. Insbesondere schneckenartig ausgebildete Förderer ermöglichen ein sehr genaues Dosieren, auch bei nur schlecht fließenden bzw. sehr pastösen Materialien, welche in den Wabenkörper eingebracht werden sollen.

Eine bevorzugte Ausführungsvariante sieht vor, dass der Förderer einen Rückwärtsgang aufweist. Weist der Förderer der Einbringvorrichtung einen Rückwärtsgang auf, kann vorteilhafter Weise ein zuvor auf das pastöse Material aufgebrachter Druck verfahrenstechnisch einfach und zudem sehr schnell reduziert werden, indem der mechanische und/oder kontinuierliche Förderer, wie beispielsweise die eingangs erwähnte Förderschnecke der Schneckenpumpe, rückwärts bewegt wird. Beispielsweise wird hierzu die zum Fördern des pastösen Materials gewählte Rotationsrichtung der Schneckenpumpe umgekehrt, so dass die Schneckenpumpe rückwärts betrieben wird. Auf diese Weise kann insbesondere an Nachfließen, was möglicherweise zu Materialverlusten oder nachträglich zu beseitigenden Verschmutzungen führen kann, minimiert werden. Auch kann vor dem Entfernen des Werkstücks von der Einbringvorrichtung durch eine Druckreduktion vermieden werden, dass bereits eingebrachtes Material den Wabenkörper unkontrolliert verlässt, wenn dieser von der Einbringvorrichtung entfernt wird.

Da allein schon das letztgenannte Merkmal hinsichtlich des Rückwärtsgangs einen herkömmlichen Förderer auch ohne die übrigen Merkmale der Erfindung vorteilhaft weiter bildet, wird die Aufgabe der Erfindung ebenfalls von einer Vorrichtung zum Einbringen eines pastösen Materials in einen Wabenkörper gelöst, wobei der Wabenkörper wenigstens zwei mit Öffnungen an einer Körperoberfläche austretende Hohlräume aufweist und diese Körperoberfläche mit einer Wegwerfmaske bedeckbar ist, die an wenigstens einer Öffnung durch wenigstens ein Loch perforiert ist, und wobei sich die Einbringvorrichtung durch einen Förderer mit einem Rückwärtsgang auszeichnet.

Vorzugsweise ragt die Wegwerfmaske über einen Rand der Körperoberfläche hinaus. Ragt die Wegwerfmaske beispielsweise über den Rand der Körperoberfläche des Wabenkörpers eben hinaus, so dass die gesamte Wegwerfmaske in etwa parallel zu der Stirnseite des Wabenkörpers angeordnet ist, kann die Wegwerfmaske in ihrem überstehenden Bereich von Halte- und/oder Spanneinrichtungen wesentlich besser ergriffen, gehalten und/oder gespannt werden. Damit die Wegwerfmaske in diesem Sinne gut handhabbar ist, ist es vorteilhaft, wenn der über die Stirnseite des Wabenkörpers hinausragende Bereich der Wegwerfmaske nicht an dem übrigen Wabenkörper anliegt, sondern von diesem Wabenkörper beabstandet ist. Idealerweise verläuft die komplette Wegwerfmaske deshalb im Wesentlichen eben und parallel zu der Stirnseite des Wabenkörpers. Wenn sich die Wegwerfmaske eben über den Rand der Körperoberfläche erstreckt, kann vorteilhafter Weise auch die Gefahr verringert werden, dass bei einem vollflächigen Befüllen des Wabenkörpers seitlich am Wabenkörper bzw. an der Wegwerfmaske Material in die Umgebung austritt. Durch einen solchen Überhang und das hierdurch ermöglichte vorteilhafte Ergreifen, Halten und Spannen ist auch gewährleistet, dass die Wegwerfmaske bis an den Rand der Stirnseite des Wabenkörpers plan und fest auf der Körperoberfläche des Wabenkörpers aufliegen kann.

Auch wird die Aufgabe der Erfindung von einer Vorrichtung zum Einbringen eines pastösen Materials in einen Wabenkörper gelöst, wobei der Wabenkörper wenigstens zwei mit Öffnungen an einer Körperoberfläche austretende Hohlräume aufweist und diese Körperoberfläche mit einer Wegwerfmaske bedeckbar ist, die an wenigstens einer Öffnung durch wenigstens ein Loch perforiert ist, und wobei sich die Einbringvorrichtung sich durch ein Mundstück auszeichnet, welches an die Wegwerfmaske ansetzbar ist, durch welches das pastöse Material gegen die Wegwerfmaske gedrückt werden kann und welches eine mehrere Durchgänge für das pastöse Material aufweisende Stabilisatorplatte aufweist.

Unter dem Begriff "Mundstück" wird jede Einrichtung verstanden, mittels welcher es konstruktiv einfach möglich ist, einen vorteilhaften Anschluss zwischen einer das pastöse Material bevorratende Einrichtung und der Wegwerfmaske zu realisieren. Mittels des vorstehend dargestellten Mundstücks kann insbesondere bei größeren Öffnungsquerschnitten des Mundstückes verhindert werden, dass nach einem Entfernen eines Wabenkörpers, mit oder ohne Wegwerfmaske, das pastöse Material in sich zusammen fällt, denn mittels der erwähnten Stabilisatorplatte gelingt es am Ausgang des Förderers, aus welchem das pastöse Material austritt, besonders gut, überstehendes pastöses Material vor dem Einbringen in den Wabenkörper zu stabilisieren, sodass es besonders betriebssicher in etwa gleichmäßig an der Wegwerfmaske bereitgestellt werden kann. Überstehendes Material wird so durch das Mundstück und insbesondere durch die Stabilisatorplatte im Wesentlichen in seiner Position gehalten, auch wenn die Wegwerfmaske bzw. der Wabenkörper von dem Förderer entfernt werden.

Vorzugsweise ist die Wegwerfmaske von der Stabilisatorplatte beabstandet angeordnet, so dass dem Werkstück eine im Wesentlichen kontinuierliche Fläche an pastösem Material gegenüberliegt und die Anordnung der Durchgänge der Stabilisatorplatte nicht mit den Öffnungen in der Wegwerfmaske übereinzustimmen braucht.

Die Aufgabe der Erfindung wird dementsprechend auch von einer Vorrichtung zum Einbringen eines pastösen Materials in einen Wabenkörper gelöst, wobei der Wabenkörper wenigstens zwei mit Öffnungen an einer Körperoberfläche austretende Hohlräume aufweist und diese Körperoberfläche mit einer Wegwergmaske bedeckbar ist, die an wenigstens einer Öffnung durch wenigstens ein Loch perforiert ist, und wobei sich die Einbringvorrichtung durch ein Mundstück auszeichnet, welches an die Wegwerfmaske ansetzbar ist, durch welches das pastöse Material gegen die Wegwerfmaske gedrückt werden kann und welches einen Kragen aufweist, der an der Wegwerfmaske anliegen kann.

Durch einen derartigen Kragen kann ein Abstand zwischen einer Stabilisatorplatte und dem jeweiligen Werkstück einfach und betriebssicher realisiert werden.

Insbesondere mittels eines derartigen Kragens, der idealerweise umlaufend an dem Mundstück vorgesehen ist, kann ein pastöser Materialüberstand baulich besonders gut beherrscht werden. Insbesondere wenn der Kragen an der Wegwerfmaske anliegt, ist die Gefahr verringert, dass pastöses Material zwischen dem Mundstück und der Wegwerfmaske in die Umgebung austreten kann.

Der Kragen kann im Wesentlichen mit der Außenkontur des Wabenkörpers übereinstimmen, muss es aber nicht, um dennoch seine Funktion zu gewährleisten. Mittels des Kragens kann vorteilhafter Weise ein vorhandener Abstand zwischen einem Ausgang eines Förderers, insbesondere zwischen Öffnungen einer Stabilisatorplatte, und der Wegwerfmaske mit dem Wabenkörper überbrücken. Weiter können mittels des Kragens eventuell vorhandene Fluchtabweichungen zwischen den Öffnungen der Stabilisatorplatte und den Löchern der Wegwerfmaske ausgeglichen werden.

Vorteilhafter Weise kann an der dem Kragen gegenüberliegende Seite der Wegwerfmaske ein Teil des Wabenkörpers anliegen, so dass die Wegwerfmaske zwischen dem Kragen und dem Teil des Wabenkörpers betriebssicher eingeklemmt werden kann. Hierdurch kann die Gefahr weiter verringert werden, dass in den Wabenkörper einzubringendes pastöses Material unbeabsichtigt in die Umgebung gelangt.

Eine alternative bzw. kumulative Ausführungsvariante sieht vor, dass an der dem Kragen gegenüberliegenden Seite der Wegwerfmaske ein Gegenhalter anliegt. Mittels eines solchen Gegenhalters kann die Wegwerfmaske unabhängig von dem Wabenkörper gegen das Mundstück bzw. gegen den Kragen des Mundstücks gedrückt werden, so dass insbesondere bei einem vollflächigen Befüllen des Wabenkörpers kein pastöses Material seitlich am Wabenkörper bzw. an der Wegwerfmaske austreten kann.

Vorteilhafter Weise kann der Gegenhalter den Wabenkörper vollständig umgreifen, so dass der Gegenhalter die Wegwerfmaske an dem Mundstück auch umlaufend betriebssicher einklemmen kann. Wenn der Gegenhalter sehr eng an dem Wabenkörper anliegt, kann der Überstand an pastösem Material flächig besonders klein gehalten werden.

Vorzugsweise ist der Gegenhalter geteilt, so dass er konstruktiv leicht auch radial von dem Wabenkörper entfernt werden kann. Beispielsweise werden hierzu zwei Teile des Gegenhalters radial von dem Wabenkörper entfernt, so dass der Wabenkörper nach dem Entfernen des Gegenhalters gut zugänglich ist.

Eine weitere vorteilhafte Ausführungsvariante sieht vor, dass der Gegenhalter den Wabenkörper ergreifen kann. Insbesondere wenn der Gegenhalter den Wabenkörper ergreifen kann, kann der Gegenhalter auch zum Transport des Wabenkörpers dienen. Hierdurch kann ein Zuführen und Wegführen des Wabenkörpers schneller vorgenommen werden, so dass mehr Wabenkörper in gleicher Zeit mit pastösem Material angereichert werden können.

Um die Druckverhältnisse innerhalb des pastösen Materials vorzugsweise im Bereich der Wegwerfmaske ermitteln zu können, ist es vorteilhaft, wenn die Einbringvorrichtung einen Drucksensor aufweist. Der Drucksensor kann hierbei innerhalb des pastösen Materials, beispielsweise in einem Materialreservoir einer Förderereinrichtung, vorgesehen sein. Besonders genaue Informationen über den Einbringgrad an pastösem Material in den Wabenkörper können ermittelt werden, wenn der Drucksensor zwischen dem Förderer und dem Wabenkörper angeordnet ist. Insbesondere kann der Drucksensor ggf. auch in einem Bereich zwischen einer Stabilisatorplatte und dem Wabenkörper vorgesehen sein.

Der Einbringgrad kann alternativ oder sicherheitshalber auch kumulativ mittels einer Volumenmessung festgestellt werden, so dass es vorteilhaft sein kann, einen Volumensensor zum Ermitteln eines Volumenstroms vorzusehen.

Eine Füllmenge kann somit über Volumen- und/oder Druckabfragen an einer Pumpe, einer Presse oder Ähnlichem abgefragt bzw. eventuell auch geregelt werden. Vorzugsweise kann eine Druckregelung erfolgen, da mit dem Einbringen von pastösem Material in die Hohlräume bzw. Kanäle des Wabenkörpers dieses Material sich an den Hohlraumwandungen immer fester ansetzt, sodass der Druck in der Fördereinrichtung bzw. auch im Mundstück immer weiter ansteigt. Dieser ermittelte Druck kann ein sehr gutes Maß dafür sein, dass sämtliche Hohlräume bzw. Kanäle in ausreichendem Maße mit pastösem Material gefüllt sind. Es versteht sich, dass der vorliegend erwähnte Drucksensor und/oder Volumenstromsensor sowie eine diesbezügliche Druck- bzw. Volumenstromsteuerung auch unabhängig von den übrigen Merkmalen vorliegender Erfindung eine Vorrichtung zum Einbringen eines pastösen Materials in einen Wabenkörper vorteilhaft weiterentwickeln.

Vorteilhafter Weise kann mit der vorliegenden Einbringvorrichtung ein schnelles und einfaches Füllen von einzelnen, selbst kleineren, Löchern bzw. Hohlräumen in einem Wabenkörper unabhängig von Position und Größe der einzelnen oder mehrerer Löcher sowie unabhängig von Größe und Form bzw. Kontur eines Wabenkörpers realisiert werden. Darüber hinaus sind auch hoch abrasive Medien mit der vorliegenden Einbringvorrichtung verarbeitbar.

Darüber hinaus wird die Aufgabe der Erfindung auch von einem Verfahren zum Einbringen eines pastösen Materials in einen Wabenkörper gelöst, wobei der Wabenkörper wenigstens zwei mit Öffnungen an einer Körperoberfläche austretende Hohlräume aufweist und diese Körperoberfläche mit einer Wegwerfmaske bedeckbar ist, die an wenigstens einer Öffnung durch wenigstens ein Loch perforiert ist, wobei das pastöse Material auf die Wegwerfmaske und damit auch durch das Loch und die Öffnung in den Hohlraum gedrückt wird und wobei der Wabenkörper nach dem Einbringen des pastösen Materials parallel zu der Körperoberfläche abgezogen wird.

Insbesondere hinsichtlich eines kontinuierlichen Einbringverfahrens ist es vorteilhaft, wenn der mit pastösem Material bereits gefüllte Wabenkörper parallel zu der Körperoberfläche von einem Ausgang einer Fördereinrichtung, insbesondere von einem Mundstück, abgezogen wird. Hierdurch wird gewährleistet, dass überflüssiges pastöses Material, welches zuvor nicht in Hohlräume bzw. Kanäle des Wabenkörpers eingedrungen ist, von dem Wabenkörper betriebssicher abgezogen werden kann und somit nicht in die Umgebung an unerwünschte Stellen gelangt. Es verbleibt vielmehr am Mundstück; so dass es für das Befüllen des nächsten Wabenkörpers unmittelbar genutzt werden kann.

Damit pastöses Material nicht übermäßig in die Umgebung gelangt, ist es vorteilhaft, wenn vor dem Abziehen der Druck auf das pastöse Material reduziert wird.

Hierbei kann eine Abzieheinrichtung während des Abziehvorgangs besonders eng anliegend insbesondere über die Körperoberfläche im Bereich der Stirnseite geführt werden. Auch ist es möglich, den Wabenkörper entsprechend über eine Abzieheinrichtung zu führen. Als Abzieheinrichtung kann beispielsweise auch ein Kragen oder ein sonstiger Rand eines Mundstücks genutzt werden.

Dementsprechend wird die Aufgabe der Erfindung auch von einem Verfahren zum Einbringen eines pastösen Materials in einen Wabenkörper gelöst, wobei der Wabenkörper wenigstens zwei mit Öffnungen an der Körperoberfläche austretende Hohlräume aufweist und diese Körperoberfläche mit einer Wegwerfmaske bedeckbar ist, die an wenigstens einer Öffnung durch wenigstens ein Loch perforiert ist, wobei das pastöse Material auch die Maske und damit auch durch das Loch und die Öffnung in den Hohlraum gedrückt wird und wobei der Druck auf das pastöse Material nach dem Einbringen des pastösen Materials reduziert wird, bevor der Wabenkörper von einer Einbringvorrichtung entfernt wird.

Besonders vorteilhaft ist es, wenn die Menge an eingebrachtem pastösem Material über den Druck auf das pastöse Material geregelt wird. Eine Regelung über den Druck kann ausreichend exakt und baulich mit geringem Aufwand auch unabhängig von den übrigen Merkmalen vorliegender Erfindung durchgeführt werden.

Insbesondere eignen sich die vorliegende Vorrichtung und das vorliegende Verfahren für Anwendungen in der Diesel- und/oder Russpartikelfilterindustrie zur Herstellung entsprechender Katalysatoren mit einem Wabenkörper. Es versteht sich, dass darüber hinaus auch anders eingesetzte Wabenkörper mit pastösem Material gefüllt werden können.

Weitere Vorteile, Ziele und Eigenschaften vorliegender Erfindung werden anhand nachfolgender Erläuterung anliegender Zeichnung beschrieben, in welcher beispielhaft ein Wabenkörper und eine Vorrichtung zum Einbringen eines pastösen Materials in den Wabenkörper schematisch dargestellt ist.

Es zeigt
- Figur 1: schematisch eine Ansicht eines Wabenkörpers für einen Katalysator mit einer auf eine Stirnseite des Wabenkörpers aufgesetzten Wegwerfmaske mit Löchern;
- Figur 2: die Anordnung nach Figur 1 in einer Ansicht auf die Wegwerfmaske;
- Figur 3: die Anordnung nach Figuren 1 und 2 in einer Ansicht auf die Rückseite der Wegwerfmaske;
- Figur 4: den Wabenkörper nach Figuren 1 bis 3 schematisch an einer Schneckenpumpe während eines Einbringens eines pastösen Materials;
- Figur 5: schematisch eine Ansicht des bereits mit pastösem Material entsprechend teilweise befüllten Wabenkörpers an der Schneckenpumpe während eines Abziehens des Wabenkörpers von einem Mundstück der Schneckenpumpe;
- Figur 6: schematisch eine Ansicht des mit pastösem Material angereicherten Wabenkörpers mit aufgesetzter Wegwerfmaske und einem daran angeordneten geschlossenen Gegenhalter;
- Figur 7: die Anordnung nach Figur 6 in einer Ansicht auf die Wegwerfmaske;
- Figur 8: die Anordnung nach Figuren 6 und 7 in einer Ansicht auf die Rückseite der Wegwerfmaske;
- Figur 9: schematisch eine Ansicht des mit pastösem Material angereicherten Wabenkörpers mit aufgesetzter Wegwerfmaske bei geöffnetem Gegenhalter;
- Figur 10: die Anordnung nach Figur 9 in einer Ansicht auf die Wegwerfmaske;
- Figur 11: die Anordnung nach Figuren 9 und 10 in einer Ansicht auf die Rückseite der Wegwerfmaske;
- Figur 12: schematisch eine Ansicht des mit pastösem Material angereicherten Wabenkörpers;
- Figur 13: die Anordnung nach Figur 12 in einer Ansicht auf die Wegwerfmaske; und
- Figur 14: die Anordnung nach Figuren 12 und 13 in einer Ansicht auf die Rückseite der Wegwerfmaske.

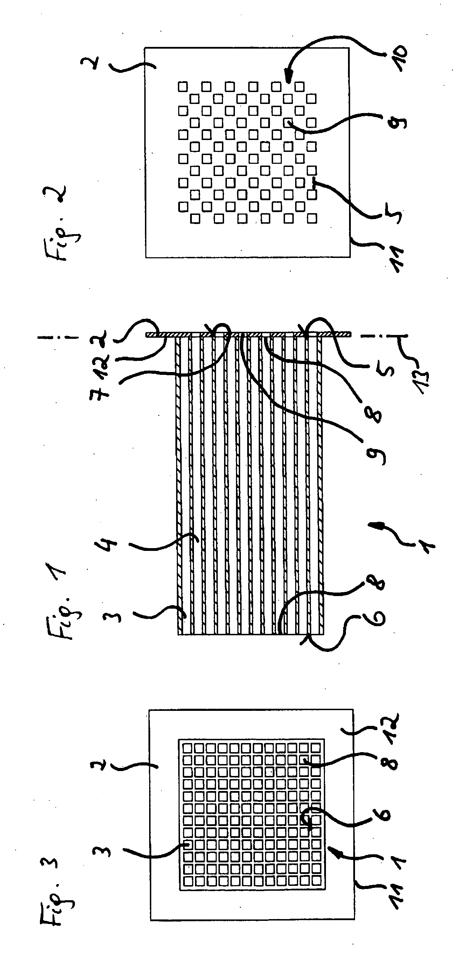

An dem in der Figuren 1 bis 3 gezeigten Wabenkörper 1, der als Grundkörper zum Herstellen eines Katalysators zum Reinigen von Abgasen von Verbrennungskraftmaschinen dient, ist eine gelochte Wegwerfmaske 2 aus einer Folie stirnseitig auf den Wabenkörper 1 aufgesetzt.

Der Wabenkörper 1 ist mit Hohlräumen 3 (hier nur exemplarisch beziffert) durchzogen, die in diesem Ausführungsbeispiel Kanäle 4 in dem Wabenkörper 1 bilden, welche den Wabenkörper 1 von einer Stirnseite 5, auf welcher die Wegwerfmaske 2 aufgesetzt ist, bis zu einer zweiten Stirnseite 6 des Wabenkörpers 1 durchziehen. Mittels der Wegwerfmaske 2 kann die Körperoberfläche 7 des Wabenkörpers 1, insbesondere an der ersten Stirnseite 5, bedeckt werden, so dass Öffnungen 8 der Hohlräume 3 bzw. der hierdurch gebildeten Kanäle 4 bedeckt werden können.

Damit zumindest einige der Hohlräume 3 bzw. Kanäle 4 des Wabenkörpers 1 durch die Wegwerfmaske 2 hindurch zugänglich sind, kann die Wegwerfmaske 2 mit Löchern 9 (siehe Figur 2) perforiert werden.

Die in der Figur 2 in einer Aufsicht gezeigte Wegwerfmaske 2 weist in einem rechteckigen Funktionsgebiet 10 eine Vielzahl derartiger Löcher 9 auf. Die Löcher 9 sind innerhalb des quadratischen Funktionsbereichs 10 schachbrettmusterartig an der Wegwerfmaske 2 angeordnet. Zwischen dem quadratischen Funktionsbereich 10 und der äußeren Begrenzung 11 ist ein umlaufender Klemmbereich 12 vorgesehen.

Die so aufgebaute Wegwerfmaske 2 liegt, sich einer Ebene 13 erstreckend, plan an der Stirnseite 5 an der Wegwerfmaske 2 auf, sodass die Wegwerfmaske 2 mit ihren umlaufenden Klemmbereich 12 über die Körperoberfläche 7, insbesondere über die erste Stirnseite 5, hinaus übersteht.

Es versteht sich, dass die Löcher 9 nahezu beliebig in die Wegwerfmaske 2 eingebracht werden können, sodass unterschiedliche Wegwerfmasken 2 mit unterschiedlichsten Perforationsmustem für die Verwendung an dem Wabenkörper 1 bereitgestellt werden können.

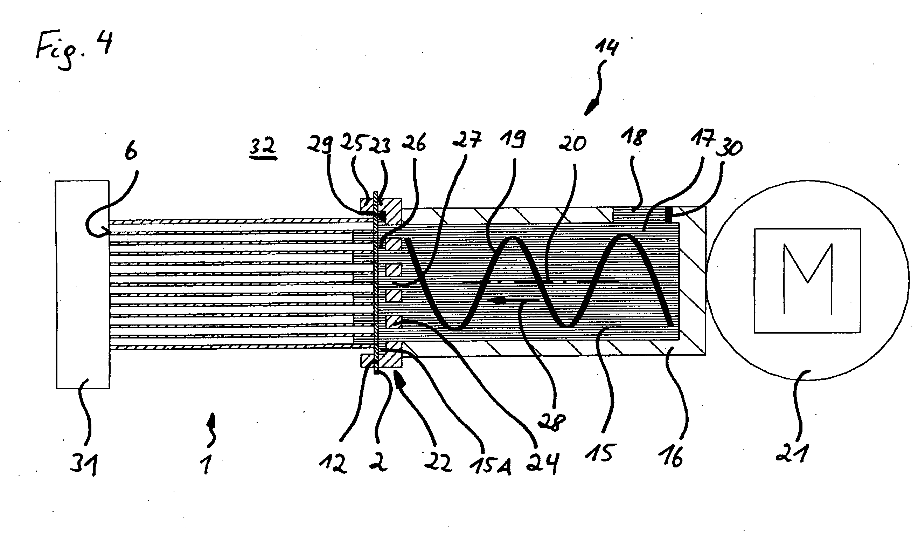

Um die Hohlräume 3 bzw. die hierdurch gebildeten Kanäle 4 in für die Verwendung an einem Katalysator typischer Weise verschließen zu können, wird der Wabenkörper 1 an eine Vorrichtung 14 zum Einbringen eines pastösen Materials 15 angeschlossen (siehe Figur 4).

Die Einbringvorrichtung 14 umfasst eine Schneckenpumpe 16 mit einer Bevorratungskammer 17 für das pastöse Material 15. Die Bevorratungskammer 17 kann durch eine Zuführöffnung 18 kontinuierlich mit pastösem Material 15 beschickt werden. Innerhalb der Bevorratungskammer 17 rotiert als Förderer eine Förderschnecke 19 um eine Rotationsachse 20, wobei die Förderschnecke 19 mittels eines Motors 21 kontinuierlich angetrieben werden kann.

Wabenkörperseitig umfasst die Einbringvorrichtung 14 weiter ein Mundstück 22, welches mit einem umlaufenden Kragen 23 und hiervon umschließend mit einer Stabilisatorplatte 24 ausgestattet ist.

An den umlaufenden Kragen 23 des Mundstücks 22 liegt die Wegwerfmaske 2 an, welche an der ersten Stirnseite 5 des Wabenkörpers 2 aufgesetzt ist. Die Wegwerfmaske 2 ist besonders gut vor dem Mundstück 22 positioniert, gehalten und aufgespannt, indem sie mittels eines Gegenhalters 25 und des umlaufenden Kragens 23 verklemmt ist.

Dadurch, dass der umlaufende Kragen 23 wabenkörperseitig über die Stabilisatorplatte 24 des Mundstücks 22 hinausragt, ist zwischen der geklemmten Wegwerfmaske 2 und der Stabilisatorplatte 24 ein Stabilisationsraum 26 für einen Materialüberstand 15A an pastösem Material 15 bereitgestellt. Der Stabilisationsraum 26 garantiert im Zusammenspiel mit einer Vielzahl an Durchgängen 27 der Stabilisatorplatte 24 einen ausgeglichenen und gleichmäßigen Überstand 15A an pastösem Material 15 kurz vor dem quadratischen Funktionsbereich 10 der Wegwerfmaske 2, sodass gewährleistet ist, dass pastöses Material 15 besonders gleichmäßig durch alle Löcher 9 der Wegwerfmaske 2 hindurch in die Hohlräume 3 bzw. Kanäle 4 des Wabenkörpers 1 eingebracht werden kann.

Das Einbringen des pastösen Materials 15 in den Wabenkörper 1 wird durch ein kontinuierliches Fördern des pastösen Materials 15 mittels der Förderschnecke 19 in Förderrichtung 28 gewährleistet. Mittels der rotierenden Förderschnecke 19 wird insbesondere im Stabilisationsraum 26 ein ausreichend großer Druck auf das pastöse Material 15 ausgeübt, sodass dieses gleichmäßig durch die Löcher 9 der Wegwerfmaske 2 gequetscht werden kann.

Hierbei steigen die Druckverhältnisse sowohl im Stabilisationsraum 26 als auch in der Bevorratungskammer 17 fortschreitend an, je weiter das pastöse Material 15 in die Hohlräume 3 bzw. Kanäle 4 des Wabenkörpers 1 eindringt. Dieser Druckanstieg wird vorliegend vorteilhaft dazu genutzt, Informationen über die Menge an pastösem Material 15 zu gewinnen, welche bereits in den Wabenkörper 1 eingebracht wurde. In diesem Ausführungsbeispiel befindet sich hierzu ein Drucksensor 29 innerhalb des Stabilisatorraumes 26, kann jedoch in einer alternativen Ausführungsform beispielsweise auch in der Bevorratungskammer 17, vorzugsweise zwischen der Förderschnecke 19 und dem Wabenkörper 1 bzw. und der Stabilisatorplatte 24, angeordnet sein. Kumulativ oder alternativ zu dem Drucksensor 29 kann die Menge des bereits in den Wabenkörper 1 eingebrachten pastösen Materials 15 mittels eines Volumenstromsensors 30 ermittelt werden, der in diesem Ausführungsbeispiel im Bereich der Zuführöffnung 18 vorgesehen ist, sodass die der Bevorratungskammer 17 zugeführte Menge an pastösem Material 15 ebenfalls ermittelt werden kann.

Damit der Wabenkörper 1 während des Einbringens des pastösen Materials 15 vor dem Mundstück 22 ordnungsgemäß positioniert bleibt, ist an der zweiten Stirnseite 6 des Wabenkörpers 1 eine Gegendruckplatte 31 vorgesehen, mittels welcher verhindert wird, dass sich der Wabenkörper 1 auf Grund des mit Druck beaufschlagten pastösen Materials 15, welches gegen die Stirnseite 5 des Wabenkörpers 1 gepresst wird, von dem Mundstück 22 abhebt.

Vorteilhafter Weise wird die Wegwerfmaske 2 im umlaufenden Klemmbereich 12 zwischen dem umlaufenden Kragen 23 des Mundstücks 22 und dem Gegenhalter 25 derart geklemmt, dass kein pastöses Material 15 unbeabsichtigt aus dem Stabilisationsraum 26 in die Umgebung 32 gelangt.

Wurde mittels des Drucksensors 29 und/oder des Volumensensors 30 ermittelt, dass der Wabenkörper 1, insbesondere dessen Hohlräume 3 bzw. Kanäle 4 ausreichend mit pastösem Material 15 angereichert wurde, wird ein Druckabbau insbesondere innerhalb des Stabilisationsraums 26 dadurch vorgenommen, dass die Förderschnecke 19 angehalten und entgegengesetzt um die Rotationsachse 20 rotiert wird. Hierbei wird die Förderschnecke 19 derart mittels des Motors 21 angesteuert, dass ein Druckabbau am pastösen Material 15 erzielt wird. Teilweise kann es sogar vorteilhaft sein, dass bereits in den Stabilisationsraum 26 gelangtes pastöses Material 15 durch die Durchgänge 27 hindurch wieder in Richtung der Bevorratungskammer 17 gesogen wird, sodass die Gefahr verringert ist, dass ein zu großer Materialüberstand 15A im Bereich des Stabilisationsraum 26 gebildet bleibt, der in die Umgebung 32 abfallen könnte, wenn der Wabenkörper 1 vom Mundstück 22 abgenommen wird.

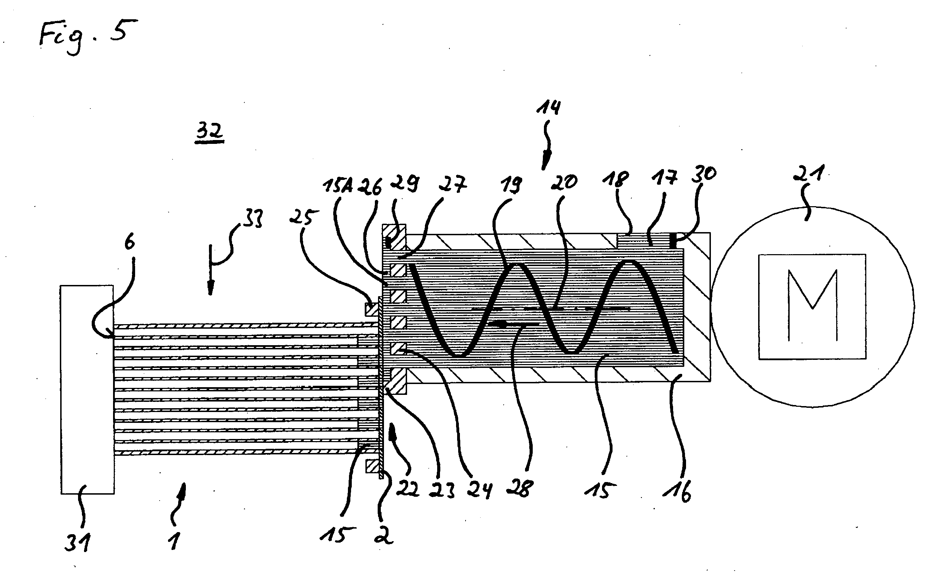

Anschließend verfährt der Wabenkörper 1 mitsamt der Gegendruckplatte 31, der Wegwerfmaske 2 und dem Gegenhalter 25 gemäß einer Transportrichtung 33 relativ gegenüber dem Mundstück 22 der Einbringvorrichtung 14, so dass die Körperoberfläche 7 des Wabenkörpers 1, insbesondere die erste Stirnseite 5 des Wabenkörpers 1, parallel zu dem Wabenkörper 1 abgezogen wird (siehe Figur 5). Hierbei dient der Kragen 23 als Abzieheinrichtung. Dieses hat den Vorteil, dass an der Wegwerfmaske 2 kaum oder idealerweise kein pastöses Material 15 hängen bleibt, sodass der Verbrauch an pastösem Material 15 auch hierdurch vorteilhaft gegenüber dem Stand der Technik reduziert werden kann.

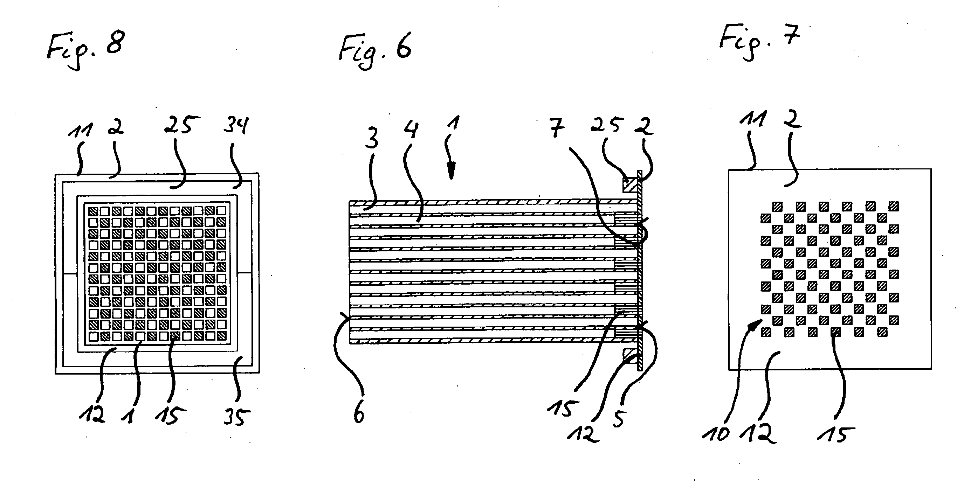

Wurde der Wabenkörper 1 mit der daran angeordneten Wegwerfmaske 2 von dem Mundstück 22 vollständig abgezogen (siehe Figuren 6 bis 8), befindet sich an der Wegwerfmaske 2 lediglich noch der Gegenhalter 25 als verbliebendes Bauteil der Einbringvorrichtung 1.

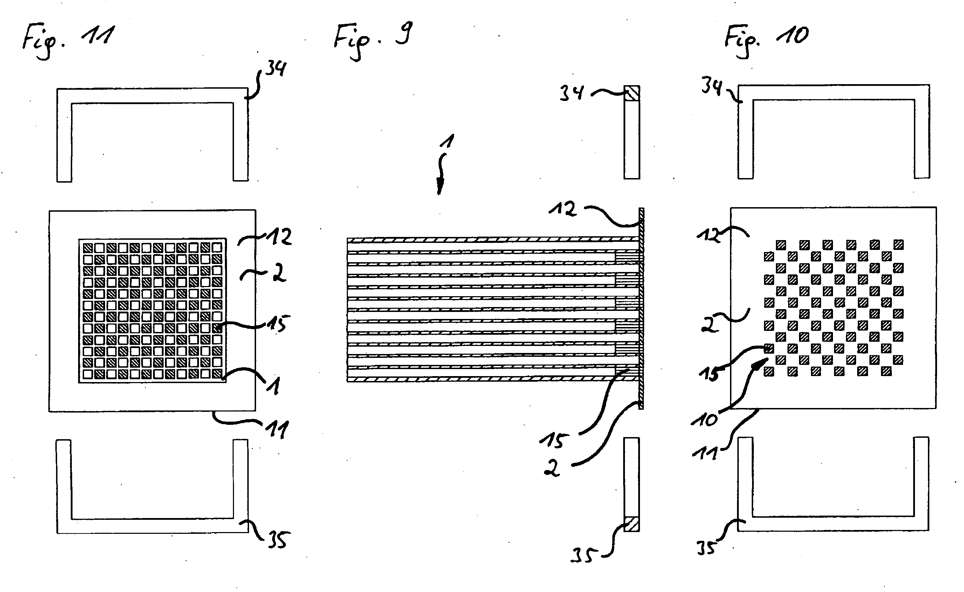

Gemäß der Darstellungen nach den Figuren 9 bi 11 wird in einem nächsten Verfahrensschritt der Gegenhalter 25 geöffnet, so dass eine erste Gegenhalterhälfte 34 und eine zweiter Gegenhalterhälfte 35 einerseits von dem Wabenkörper 1 und andererseits von der Wegwerfmaske 2 entfernt angeordnet sind. Hierdurch ist der Wabenkörper 1 für weitere Fertigungsschritte, insbesondere auch für ein Entfernen der Wegwerfmaske 2 wesentlich besser zugänglich.

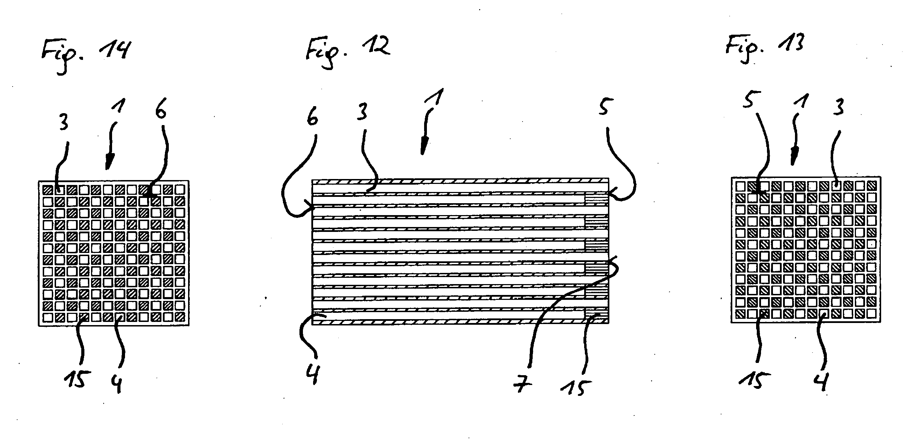

Bei dem fertigen Wabenkörper 1 (siehe Figuren 12 bis 14) ist dann auch die bisher auf den Wabenkörper 1 aufgesetzte Wegwerfmaske 2 abgenommen, so dass der Wabenkörper 1 als Fertigbauteil mit eingebrachtem pastösem Material 15 vorliegt und weiter verarbeitet werden kann. Insbesondere kann auch die andere Seite, die Stirnseite 6, entsprechend behandelt werden.

### Bezugsziffernliste

- 1: Wabenkörper eines Katalysators
- 2: Wegwerfmaske
- 3: Hohlräume
- 4: Kanäle
- 5: erste Stirnseite
- 6: zweite Stirnseite
- 7: Körperoberfläche
- 8: Öffnungen
- 9: Löcher
- 10: quadratischer Funktionsbereich
- 11: äußere Begrenzung
- 12: umlaufender Klemmbereich
- 13: Ebene
- 14: Einbringvorrichtung
- 15: pastöses Material
- 15A: Überstand
- 16: Schneckenpumpe
- 17: Bevorratungskammer
- 18: Zuführöffnung
- 19: Förderschnecke
- 20: Rotationsachse
- 21: Motor
- 22: Mundstück
- 23: umlaufender Kragen
- 24: Stabilisatorplatte
- 25: Gegenhalter
- 26: Stabilisationsraum
- 27: Durchgänge
- 28: Förderrichtung
- 29: Drucksensor
- 30: Volumenstromsensor
- 31: Gegendruckplatte
- 32: Umgebung
- 33: Transportrichtung
- 34: erste Gegenhalterhälfte
- 35: zweite Gegenhalterhälfte

## Patentansprüche

1. Vorrichtung (14) zum Einbringen eines pastösen Materials (15) in einen Wabenkörper (1), wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, ***gekennzeichnet durch*** einen mechanischen Förderer (19) zum Beaufschlagen des pastösen Materials (15) mit einem zum Einbringen des pastösen Materials (15) erforderlichen Druck.

2. Vorrichtung (14) zum Einbringen eines pastösen Materials (15) in einen Wabenkörper (1), insbesondere auch nach Anspruch 1, wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, ***gekennzeichnet durch*** einen kontinuierlichen Förderer (19) zum Beaufschlagen des pastösen Materials (15) mit einem zum Einbringen des pastösen Materials (15) erforderlichen Druck.

3. Vorrichtung (14) zum Einbringen eines pastösen Materials (15) in einen Wabenkörper (1), insbesondere auch nach einem der vorstehenden Ansprüche, wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, ***gekennzeichnet durch*** einen Förderer (19) mit Rückwärtsgang.

4. Vorrichtung (14) zum Einbringen eines pastösen Materials (15) in einen Wabenkörper (1), insbesondere auch nach einem der vorstehenden Ansprüche, wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, ***gekennzeichnet durch*** ein Mundstück (22), welches an die Wegwerfmaske (2) ansetzbar ist, **durch** welches das pastöse Material (15) gegen die Wegwerfmaske (2) gedrückt werden kann und welches eine mehrere Durchgänge (27) für das pastöse Material (15) aufweisende Stabilisatorplatte (24) aufweist.

5. Vorrichtung nach Anspruch 4, ***dadurch gekennzeichnet, dass*** die Wegwerfmaske (2) von der Stabilisatorplatte (24) beabstandet angeordnet ist.

6. Vorrichtung (14) zum Einbringen eines pastösen Materials (15) in einen Wabenkörper (1), insbesondere auch nach einem der vorstehenden Ansprüche, wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, ***gekennzeichnet durch*** ein Mundstück (22), welches an die Wegwerfmaske (2) ansetzbar ist, **durch** welches das pastöse Material (15) gegen die Wegwerfmaske (2) gedrückt werden kann und welches einen Kragen (23) aufweist, der an der Wegwerfmaske (2) anliegt.

7. Vorrichtung (14) nach Anspruch 6, ***dadurch gekennzeichnet, dass*** der Kragen (23) umlaufend an dem Mundstück vorgesehen ist.

8. Vorrichtung (14) nach Anspruch 6 oder 7, ***dadurch gekennzeichnet, dass*** an der dem Kragen (23) gegenüberliegenden Seite der Wegwerfmaske (2) ein Teil des Wabenkörpers (1) anliegt.

9. Vorrichtung (14) nach einem der Ansprüche 6 bis 8, ***dadurch gekennzeichnet, dass*** an der dem Kragen (23) gegenüberliegenden Seite der Wegwerfmaske (2) ein Gegenhalter (25) anliegt.

10. Vorrichtung (14) nach Anspruch 9, ***dadurch gekennzeichnet, dass*** der Gegenhalter (25) den Wabenkörper (1) vollständig umgreift.

11. Vorrichtung (14) nach Anspruch 10, ***dadurch gekennzeichnet, dass*** der Gegenhalter (25) geteilt ist.

12. Vorrichtung (14) nach einem Anspruch 9 bis 11, ***dadurch gekennzeichnet, dass*** der Gegenhalter (25) den Wabenkörper (1) greifen kann.

13. Vorrichtung (14) nach einem der vorstehenden Ansprüche, ***dadurch gekennzeichnet, dass*** die Wegwerfmaske (2) eben über einen Rand der Körperoberfläche (7) hinausragt.

14. Vorrichtung (14) nach einem der vorstehenden Ansprüche, ***gekennzeichnet durch*** einen Drucksensor (29) insbesondere zwischen Förderer (19) und Wabenkörper (1).

15. Vorrichtung (14) nach einem der vorstehenden Ansprüche, ***gekennzeichnet durch*** einen Volumenstromsensor (30).

16. Verfahren zum Einbringen eines pastösen Materials (15) in einen Wabenkörper (1), wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, wobei das pastöse Material (15) auf die Wegwerfmaske (2) und damit auch durch das Loch (9) und die Öffnung (8) in den Hohlraum (3) gedrückt wird und wobei der Wabenkörper (2) nach dem Einbringen des pastösen Materials (15) im Wesentlichen parallel zu der Körperoberfläche (7) abgezogen wird.

17. Verfahren nach Anspruch 16, ***dadurch gekennzeichnet, dass*** vor dem Abziehen der Druck auf das pastöse Material (15) reduziert wird.

18. Verfahren zum Einbringen eines pastösen Materials (15) in einen Wabenkörper (1), insbesondere auch nach einem der Ansprüche 16 oder 17, wobei der Wabenkörper (1) wenigstens zwei mit Öffnungen (8) an einer Körperoberfläche (7) austretende Hohlräume (3) aufweist und diese Körperoberfläche (7) mit einer Wegwerfmaske (2) bedeckbar ist, die an wenigstens einer Öffnung (8) durch wenigstens ein Loch (9) perforiert ist, wobei das pastöse Material (15) auf die Wegwerfmaske (2) und damit auch durch das Loch (9) und die Öffnung (8) in den Hohlraum (3) gedrückt wird und wobei der Druck auf das pastöse Material (15) nach dem Einbringen des pastösen Materials (15) reduziert wird, bevor der Wabenkörper (1) von einer Einbringvorrichtung (14) entfernt wird.

19. Verfahren nach Anspruch 18, ***dadurch gekennzeichnet, dass*** der Wabenkörper (1) nach dem Einbringen des pastösen Materials (15) im Wesentlichen parallel zu der Körperoberfläche (7) abgezogen wird.

20. Verfahren nach einem der Ansprüche 16 bis 19, ***dadurch gekennzeichnet, dass*** die Menge an eingebrachtem pastösem Material (15) über den Druck auf das pastöse Material (15) geregelt wird.
